# EUROPÄISCHE PATENTSCHRIFT

(11) **EP 3 543 081 B1**
(45) Veröffentlichungstag und Bekanntmachung des Hinweises auf die Patenterteilung: **06.01.2021**
(21) Anmeldenummer: 19160278.8
(22) Anmeldetag: 01.03.2019
(51) Int. Cl.: B60W 30/06, B62D 15/02

(54) **VERFAHREN ZUM AUSPARKEN EINES KRAFTFAHRZEUGS AUS EINEM PARKPLATZ UND KRAFTFAHRZEUG MIT EINER STEUEREINHEIT ZUM AUSFÜHREN EINES DERARTIGEN VERFAHRENS**
METHOD FOR PULLING OUT OF A PARKING SPACE FOR A MOTOR VEHICLE AND MOTOR VEHICLE WITH A CONTROL UNIT FOR CARRYING OUT SUCH A METHOD
PROCÉDÉ DE SORTIE D'UN VÉHICULE AUTOMOBILE D'UN ESPACE DE STATIONNEMENT ET VÉHICULE AUTOMOBILE COMPORTANT DOTÉ D'UNE UNITÉ DE COMMANDE PERMETTANT LA MISE EN UVRE D'UN TEL PROCÉDÉ

(30) Priorität: 19.03.2018 DE 102018204134
(43) Veröffentlichungstag der Anmeldung: 25.09.2019
(73) Patentinhaber: VOLKSWAGEN AKTIENGESELLSCHAFT, 38440 Wolfsburg (DE)
(72) Erfinder: Hüger, Philipp, 38471 Rühen (DE); Ziebart, Sascha, 38547 Calberlah (Wettmershagen) (DE)

(56) Entgegenhaltungen:
- DE-A1-102007 002 261
- DE-A1-102013 020 699
- DE-A1-102014 206 901
- DE-A1-102016 211 180

## Beschreibung

Die Erfindung betrifft ein Verfahren zum Ausparken eines Kraftfahrzeugs aus einem Parkplatz sowie ein eine Steuereinheit umfassendes Kraftfahrzeug, das dazu ausgelegt ist, ein derartiges Verfahren durchzuführen.

Bei einem automatischen Ausparken eines Kraftfahrzeugs aus einer Querparklücke mithilfe eines entsprechenden Parkhilfeassistenten sind häufig mehrere Zielanordnungen des Kraftfahrzeugs nach dem Ausparken möglich. Ein Benutzer des Kraftfahrzeugs muss daher, wenn er ein automatisches Ausparken des Kraftfahrzeugs aus der Parklücke aktiviert, die gewünschte Zielanordnung des Kraftfahrzeugs nach dem Ausparken angeben. Dies erfolgt üblicherweise mithilfe einer entsprechenden Anordnungsauswahl in einer Mobilfunkgeräte-App, die dem Benutzer auf einer Anzeige eines Mobilfunkgeräts angezeigt wird.

Aus der DE 10 2011 107 974 A1 ist ein Verfahren zum Rangieren eines Fahrzeugs in einem Umfeld bekannt. Im Rahmen dieses Verfahrens erfolgt zunächst ein Referenzrangiervorgang in dem Umfeld in einem Lernmodus des Fahrzeugs, der abgespeichert wird und basierend auf dem zumindest semi-autonom durchgeführte Wiederholrangiervorgänge in demselben Umfeld möglich sind. Ein im Rahmen eines solchen Referenzrangiervorgangs abgespeicherter Einpark- beziehungsweise Ausparkvorgang kann daraufhin immer wieder autonom vom Kraftfahrzeug durchgeführt werden.

Aus der DE 10 2013 019 830 A1 ist ein Verfahren zur Positionierung eines Kraftfahrzeugs bei einem automatisierten Parkvorgang bekannt. Bei diesem Ausparkvorgang wird das Kraftfahrzeug autonom auf einer Ausparktrajektorie geführt. Das Starten und Beenden des Ausparkvorgangs erfolgt mithilfe einer von einem Benutzer bedienten mobilen externen Bedieneinrichtung. Der Benutzer entscheidet hierbei über eine optimale Einsteigeposition in das Kraftfahrzeug. Im Rahmen des Verfahrens wird daraufhin das Kraftfahrzeug nach Beenden des Ausparkvorgangs automatisch zu der gewünschten Einsteigeposition gefahren und dort an den Benutzer des Kraftfahrzeugs übergeben.

Die WO 2011/151045 A1 beschreibt ein Verfahren und eine Vorrichtung zum Auswählen einer Parkassistenzfunktion aus einer vorgegebenen Vielzahl von Parkassistenzfunktionen eines Parklenkassistenten, wobei die Parkassistenzfunktionen in zwei Gruppen angeordnet sind, je nachdem ob sie ein Einparken oder ein Ausparken des Fahrzeugs betreffende Funktionen umfassen. Eine Auswahl zwischen den zwei Funktionsgruppen wird als Funktion des Zündschalterzustands und einer zurückgelegten Fahrstrecke des Kraftfahrzeugs getroffen, wodurch das Verfahren automatisch zwischen Einparkfunktionen und Ausparkfunktionen unterscheidet.

Die DE 10 2011 109 492 A1 zeigt eine Fahrunterstützungsvorrichtung für ein Kraftfahrzeug zur Unterstützung der Befahrung enger Fahrwege. Durch Erfassung der Daten einer zurückzulegenden Wegstrecke (Trajektorie) aus Rad- und Lenkwinkelsensoren und Aufzeichnung von Wegstreckendaten kann letztendlich eine Ansteuerung des Kraftfahrzeuges auf der Grundlage der aufgezeichneten Wegstreckendaten erfolgen. Es wird nun überprüft, ob sich das Kraftfahrzeug in der Umgebung von Straßenbereichen mit eingeschränkter Navigationsmöglichkeit befindet und in einem solchen Fall wird dem Fahrer die Aufzeichnung einer Trajektorie vorgeschlagen oder dies automatisch durchgeführt.

Die DE 10 2014 206 901 A1, die als nächstliegender Stand der Technik angesehen wird, offenbart ein Verfahren zum Ausparken eines Kraftfahrzeugs aus einem Parkplatz, wobei das Kraftfahrzeug eine Steuereinheit umfasst, die dazu ausgelegt ist, das Kraftfahrzeug zumindest teilautonom zu steuern, umfassend die folgenden Schritte:
- Bereitstellen von eine aktuelle Parksituation betreffenden Daten,
- Ermitteln möglicher Zielanordnungen des Kraftfahrzeugs basierend auf den bereitgestellten Daten
- Ermitteln einer Wahrscheinlichkeit, mit der die jeweilige Zielanordnung unter Berücksichtigung der bereitgestellten Daten einer Wunschzielanordnung eines Benutzers des Kraftfahrzeugs entspricht,
- Einordnen der Zielanordnungen gemäß ihrer Wahrscheinlichkeit in eine Rangfolge und Bereitstellen dieser Rangfolge,
- Falls nur eine Zielanordnung als mögliche Zielanordnung ermittelt wurde, erfolgt ein von der Steuereinheit angesteuertes Ausparken des Kraftfahrzeugs entlang einer zu dieser Zielanordnung führenden und basierend auf vorbestimmten Kriterien bestimmten Ausparkroute.

Es ist die Aufgabe der Erfindung, eine Lösung bereitzustellen, mit der ein automatisches Ausparken eines Kraftfahrzeugs besonders schnell und für einen Benutzer des Kraftfahrzeugs vorteilhaft erfolgen kann.

Diese Aufgabe wird durch ein Verfahren zum Ausparken eines Kraftfahrzeugs aus einem Parkplatz sowie ein Kraftfahrzeug mit einer Steuereinheit zum Ausführen eines derartigen Verfahrens gelöst.

Das erfindungsgemäße Verfahren zum Ausparken eines Kraftfahrzeugs aus einem Parkplatz ist für ein Kraftfahrzeug ausgelegt, das eine Steuereinheit umfasst, die dazu ausgelegt ist, das Kraftfahrzeug zumindest teilautonom zu steuern. Das erfindungsgemäße Verfahren umfasst die folgenden Schritte: Zunächst erfolgt ein Bereitstellen von eine aktuelle Parksituation betreffenden Daten, ein Ermitteln möglicher Zielanordnungen des Kraftfahrzeugs basierend auf den bereitgestellten Daten sowie ein Ermitteln einer Wahrscheinlichkeit, mit der die jeweilige Zielanordnung unter Berücksichtigung der bereitgestellten Daten einer Wunschzielanordnung eines Benutzers des Kraftfahrzeugs entspricht. Danach erfolgen ein Einordnen der Zielanordnungen gemäß ihrer Wahrscheinlichkeit in einer Rangfolge sowie ein Bereitstellen dieser Rangfolge. Falls nur eine Zielanordnung als mögliche Zielanordnung ermittelt wurde, wird ein von der Steuereinheit angesteuertes Ausparken des Kraftfahrzeugs entlang einer zu dieser Zielanordnung führenden und basierend auf vorbestimmten Kriterien bestimmten Ausparkroute durchgeführt.

Das erfindungsgemäße Verfahren ist also dafür ausgelegt, einen Benutzer eines Kraftfahrzeugs, dessen Kraftfahrzeug bereits auf einem Parkplatz abgestellt wurde, bei einem Ausparken aus diesem Parkplatz zu unterstützen. Das Verfahren ist generell für ein Kraftfahrzeug geeignet, das mithilfe einer entsprechenden Steuereinheit derart gesteuert, beschleunigt und/oder gebremst werden kann, dass ein zumindest teilweise autonomer Betrieb des Kraftfahrzeugs möglich ist. Das erfindungsgemäße Verfahren basiert darauf, dass vorbestimmte, das Parken des Kraftfahrzeugs beschreibende Daten im Kraftfahrzeug hinterlegt sind. Unter Berücksichtigung dieser Daten werden mögliche Zielpositionen mit der dazugehörigen Zielausrichtung des Kraftfahrzeugs bestimmt, das heißt mögliche Zielanordnungen ermittelt, die das Kraftfahrzeug nach dem Ausparken aus der Parklücke einnehmen könnte. Jeder der derart ermittelten Zielanordnungen wird daraufhin ein Wahrscheinlichkeitswert zugeordnet. Dieser Wahrscheinlichkeitswert, der basierend auf den die aktuelle Parksituation betreffenden Daten ermittelt wird, gibt an, wie wahrscheinlich die entsprechende Zielanordnung einer vom Benutzer gewünschten Zielanordnung entspricht. Eine Zielanordnung, die mit besonders hoher Wahrscheinlichkeit einer solchen Wunschzielanordnung des Benutzers des Kraftfahrzeugs spricht, wird mit einem entsprechend hohen Wahrscheinlichkeitswert bewertet, wohingegen eine eher nicht zu erwartende Zielanordnung mit einem deutlich niedrigeren Wahrscheinlichkeitswert bewertet wird. Die einzelnen Zielanordnungen werden daraufhin nach ihrem Wahrscheinlichkeitswert geordnet angeordnet. Diese Reihenfolge an Zielanordnungen wird dem Benutzer des Kraftfahrzeugs zur Verfügung gestellt. Falls nur eine Zielanordnung als wahrscheinliche Zielanordnung unter Berücksichtigung einer möglichen Wunschzielanordnung des Benutzers sowie der bereitgestellten Daten ermittelt wird, erfolgt ein autonomes Ausparken des Kraftfahrzeugs zu dieser Zielanordnung. Dieses autonome Ausparken wird von der Steuereinheit des Kraftfahrzeugs angesteuert und erfolgt entlang einer vorbestimmten Fahrroute, der sogenannten Ausparkroute. Bei der Bestimmung dieser Ausparkroute werden bereitgestellte und vorbestimmte Voraussetzungen an die Ausparkroute berücksichtigt, die als Kriterien im Kraftfahrzeug hinterlegt sind.

Wurde beispielsweise ein Kraftfahrzeug, das zum zumindest teilautonomen Fahren ausgelegt ist und eine entsprechende Steuereinheit aufweist, in Vorwärtsrichtung auf einer Querparklücke eingeparkt, kann das Kraftfahrzeug mithilfe des erfindungsgemäßen Verfahrens zumindest teilautonom ausgeparkt werden. Im Rahmen des entsprechenden Verfahrens zum Ausparken des Kraftfahrzeugs aus dem Parkplatz werden zunächst verschiedene, die aktuelle Parksituation betreffende Daten berücksichtigt. Bei diesen Daten handelt es sich beispielsweise um die Einparkausrichtung, das heißt, ob das Kraftfahrzeug vorwärts oder rückwärts eingeparkt wurde, eine Startanordnung des Kraftfahrzeugs, von der aus das Kraftfahrzeug zuvor auf dem Parkplatz eingeparkt wurde oder Informationen zur Verkehrsrichtung auf der an den Parkplatz angrenzenden Straße. Unter Berücksichtigung der bereitgestellten Daten wird daraufhin die Wahrscheinlichkeit bestimmt, mit der die jeweilige der Zielanordnungen einer von einem Benutzer des Kraftfahrzeugs gewünschten Zielanordnung entspricht, der sogenannten Wunschzielanordnung. Die einzelnen Zielanordnungen werden daraufhin gemäß der ermittelten Wahrscheinlichkeit in eine Reihenfolge eingeordnet und diese Reihenfolge bereitgestellt. Hierbei wird beispielsweise berücksichtigt, dass es wahrscheinlicher ist, dass ein Fahrer des Kraftfahrzeugs in die gleiche Richtung weiterfahren möchte, aus der er vor dem Einparken gekommen ist, verglichen mit der Wahrscheinlichkeit eines gewünschten Wendens des Kraftfahrzeugs und einer Weiterfahrt entgegen der Hinfahrrichtung.

Falls nur eine Zielanordnung als mögliche Zielanordnung ermittelt wurde, beispielsweise aufgrund von Hindernissen in der Umgebung des Parkplatzes, aufgrund der bestimmte Fahrtrichtungen nach dem Ausparken des Kraftfahrzeugs nicht möglich sind, erfolgt ein von der Steuereinrichtung angesteuertes Ausparken des Kraftfahrzeugs entlang einer zu der ermittelten Zielanordnung führenden und basierend auf vorbestimmten Kriterien bestimmten Ausparkroute. Sobald die Zielanordnung erreicht ist, kann das Kraftfahrzeug wieder dem Benutzer des Kraftfahrzeugs übergeben werden, sodass dieser weiter mit dem Kraftfahrzeug in die gewünschte Richtung fahren kann.

Mit dem erfindungsgemäßen Verfahren ist somit ein besonders schnell durchzuführendes Ausparken des Kraftfahrzeugs mittels einer automatischen Steuerung möglich. Es ist hierbei keine aufwendige Bestimmung der Zielanordnung des Kraftfahrzeugs, beispielsweise mithilfe einer entsprechenden Auswahl auf einer Anzeige eines Mobilfunkgeräts des Benutzers des Kraftfahrzeugs, nötig, um in bestimmten Parksituationen das Kraftfahrzeug mithilfe des Verfahrens autonom ausparken zu lassen. Durch die Bestimmung der Wahrscheinlichkeiten der einzelnen möglichen Zielanordnungen ist außerdem ein besonders sinnvolles Ausparken eines Kraftfahrzeugs aus einem Parkplatz möglich, da beispielsweise die Zielanordnungen, die aufgrund der geltenden Verkehrsrichtung auf einer an den Parkplatz angrenzenden Fahrbahn nicht zulässig sind, mit einer Wahrscheinlichkeit von null bewertet werden können. Dadurch kann sichergestellt werden, dass diese nicht zugelassenen Zielanordnungen dem Benutzer des Kraftfahrzeugs nicht vorgeschlagen werden.

Erfindungsgemäß ist es vorgesehen, dass beim Ermitteln der Wahrscheinlichkeit zumindest die folgenden, die aktuelle Parksituation betreffenden Daten berücksichtigt werden: Eine Fahrzeugausrichtung des parkenden Kraftfahrzeugs bezogen auf eine Fahrbahn, eine Startanordnung, von der aus das Kraftfahrzeug zuvor auf dem Parkplatz eingeparkt wurde und eine Verkehrsrichtung auf der an den Parkplatz angrenzenden Fahrbahn. Die die aktuelle Parksituation betreffenden Daten beinhalten also zum einen Informationen darüber, ob das Kraftfahrzeug vorwärts oder rückwärts auf dem Parkplatz eingeparkt wurde, da die Fahrzeugausrichtung gegeben ist. Zudem sind die Startausrichtung sowie die Startposition des Kraftfahrzeugs vor dem Einparken in Form einer Startanordnung bekannt. Die Startanordnung enthält somit Informationen darüber, von welcher Richtung aus das Kraftfahrzeug eingeparkt wurde. Die Startausrichtung kann entweder links oder rechts vom Parkplatz liegen. Die Startposition wiederum enthält die Informationen, ob das Kraftfahrzeug von der Fahrbahnseite oder von der Gegenfahrbahnseite her auf den Parkplatz gefahren ist. Außerdem wird berücksichtigt, ob Links- oder Rechtsverkehr herrscht, das heißt, es wird die Ländervariante der Verkehrsrichtung, die typischerweise im Kraftfahrzeug hinterlegt ist, berücksichtigt.

Die Bestimmung der Fahrzeugausrichtung des parkenden Kraftfahrzeugs bezogen auf die Fahrbahn kann beispielsweise mithilfe von Odometrie bestimmt werden. Odometrie bezeichnet eine Methode der Schätzung von Position und Orientierung eines mobilen Systems, wie beispielsweise eines Kraftfahrzeugs, anhand der Daten seines Vortriebsystems. Durch Räder angetriebene Systeme benutzen dafür die Anzahl der Radumdrehungen. Das Kraftfahrzeug verfügt somit beispielsweise über ein Odometer, um bestimmen zu können, ob das Kraftfahrzeug vorwärts oder rückwärts in die Parklücke eingeparkt wird. Diese Informationen werden daraufhin in der Speichereinheit des Kraftfahrzeugs hinterlegt und können im Rahmen des Verfahrens zum Ausparken des Kraftfahrzeugs aus dem Parkplatz aufgerufen und berücksichtigt werden.

Unter Berücksichtigung der die aktuelle Parksituation betreffenden Daten können im Falle eines Ausparkens aus einer Querparklücke insgesamt acht mögliche Zielanordnungen des Kraftfahrzeugs ermittelt werden. Diese acht Möglichkeiten unterscheiden sich in einer Richtung des Ausparkens, das heißt darin, ob das Kraftfahrzeug beim Verlassen des Parkplatzes nach links oder rechts fährt, dem Ausparkabstand, das heißt, ob das Kraftfahrzeug auf der Fahrbahnseite oder auf der Gegenfahrbahnseite seine Zielposition hat, und in der von der Einparkausrichtung abhängigen Ausparkrichtung, das heißt ob vorwärts oder rückwärts ausgeparkt wird.

Beim Ermitteln der Wahrscheinlichkeit wird somit beispielsweise berücksichtigt, dass ein Kraftfahrzeug vorwärts auf dem Parkplatz eingeparkt wurde und sich dafür von links, bezogen auf den Parkplatz, auf der Fahrbahnseite dem Parkplatz genähert hat. In diesem Beispiel ist zudem als Verkehrsrichtung die rechte Straßenseite hinterlegt, es gilt somit Rechtsverkehr auf der an den Parkplatz angrenzenden Straße. Dem Ermitteln der Wahrscheinlichkeit liegt somit die Information zugrunde, aus welcher Richtung das Kraftfahrzeug zu dem Parkplatz gefahren wurde, wodurch in gewisser Weise Informationen über eine mögliche Weiterfahrt enthalten sind. Beispielsweise kann das Kraftfahrzeug daraufhin in gleicher Richtung wie zuvor weitergefahren oder in seiner Richtung geändert und auf der entgegengesetzten Fahrbahn, das heißt auf der Gegenfahrbahnseite, nach links in die Fahrrichtung zurückfahren werden, aus der es gekommen ist. Mithilfe der die aktuelle Parksituation betreffenden Daten, die von den Sensoreinheiten erfasst werden und/oder in der Speichereinheit des Kraftfahrzeugs hinterlegt sind, wird daher ein besonders sinnvolles und schnelles Ermitteln der Wahrscheinlichkeiten der einzelnen möglichen Zielanordnungen des Kraftfahrzeugs ermöglicht.

In vorteilhafter Ausgestaltung der Erfindung ist es vorgesehen, dass die die aktuelle Parksituation betreffenden Daten anhand von Fahrzeugumgebungsdaten bereitgestellt werden, die insbesondere von Sensoreinheiten des Kraftfahrzeugs aktuell erfasst werden und/oder in einer Speichereinheit des Kraftfahrzeugs hinterlegt wurden. Die die aktuelle Parksituation betreffenden Daten beschreiben also die Umgebung des Kraftfahrzeugs, das auf einem Parkplatz abgestellt wurde. Diese Daten können von entsprechenden Sensoren des Kraftfahrzeugs aktiv erfasst werden. Andererseits ist es auch möglich, dass diese Daten bereits beim Einparkvorgang von den Sensoren des Kraftfahrzeugs aufgenommen wurden und in einer entsprechenden Speichereinheit des Kraftfahrzeugs abgespeichert wurden. Mithilfe der Sensoreinheit des Kraftfahrzeugs ist es möglich, Hindernisse in der Umgebung des Parkplatzes, aber auch im Bereich der an den Parkplatz angrenzenden Fahrbahn beziehungsweise Straße zu erkennen und bei der Ermittlung der möglichen Zielanordnung des Kraftfahrzeugs zu berücksichtigen.

Die die aktuelle Parksituation betreffenden Daten können beispielsweise von bildgebenden Kameras, Radargeräten oder Lidar (Light Detection and Ranging)-Systemen bereitgestellt werden. Diese Sensoreinheiten können im Frontbereich, im Heckbereich sowie an den Seiten des Kraftfahrzeugs, beispielsweise als in die Seitenspiegel des Kraftfahrzeugs integrierte Kameras, bereitgestellt sein. Insbesondere falls einzelne dieser Sensoren durch das Parken des Kraftfahrzeugs auf dem Parkplatz in ihrem Erfassungsbereich eingeschränkt sind, beispielsweise durch den Parkplatz begrenzende Wände, kann es sinnvoll sein, alternativ oder zusätzlich zu den aktuell erfassten Sensordaten auf in der Speichereinheit des Kraftfahrzeugs gespeicherte, beim Einparkvorgang des Kraftfahrzeugs aufgenommene, Sensordaten zurückzugreifen. Anhand der die aktuelle Parksituation betreffenden Daten können somit besonders vorteilhaft mögliche Zielpositionen des Kraftfahrzeugs nach dem Ausparken erkannt werden, da diese Daten detaillierte Informationen über die Fahrzeugumgebung bereitstellen. Dies unterstützt ein für den Benutzer des Kraftfahrzeugs besonders vorteilhaftes Ausparken des Kraftfahrzeugs aus dem Parkplatz.

Falls sich der Parkplatz des Kraftfahrzeugs in einer Infrastruktureinrichtung, wie beispielsweise einem Parkhaus, befindet, kann zusätzlich über eine Kommunikationsverbindung zwischen einer Kommunikationseinheit der Infrastruktureinheit und einer Kommunikationseinheit des Kraftfahrzeugs eine Übermittlung von die aktuelle Parksituation betreffenden Daten, die von entsprechenden Sensoren der Infrastruktureinrichtung bereitgestellt werden, an das Kraftfahrzeug erfolgen. Hierdurch ist es beispielsweise möglich, dass dem Kraftfahrzeug auch von entsprechenden Kameras des Parkhauses aufgenommene Daten zur Fahrzeugumgebung bereitgestellt werden können, wodurch das Verfahren zum Ausparken eines Kraftfahrzeugs aus einem Parkplatz in eine Infrastruktureinrichtung besonders vorteilhaft gestaltet werden kann.

In einer weiteren vorteilhaften Ausgestaltung der Erfindung ist es vorgesehen, dass beim Ermitteln der Wahrscheinlichkeit als die aktuelle Parksituation betreffende Daten vorbestimmte bereitgestellte Fahrroutenkriterien berücksichtigt werden, die Informationen über ein Fahrziel des Kraftfahrzeugs nach dem Ausparken umfassen und von zumindest einem der folgenden Systeme bereitgestellt werden: Einem Navigationssystem des Kraftfahrzeugs, einem digitalen Kalender des Benutzers des Kraftfahrzeugs.

Zusätzlich zu den bereits genannten die aktuelle Parksituation betreffenden Daten, die durch den Einparkvorgang sowie die Verkehrsrichtung gegeben sind, können weitere Daten in Form eines Fahrziels hinterlegt sein, anhand derer die Wunschzielanordnung des Kraftfahrzeugs ermittelt werden kann, wodurch letztendlich die Wahrscheinlichkeit der jeweiligen Zielanordnungen der Wunschzielanordnung des Benutzers zu entsprechen ermittelt werden kann. Das Fahrziel des Kraftfahrzeugs kann in einem Navigationssystem des Kraftfahrzeugs hinterlegt sein, in dem das als nächstes geplante Fahrziel bereits hinterlegt wurde. Des Weiteren ist es möglich, dass ein digitaler Kalender des Benutzers des Kraftfahrzeugs Daten über anstehende Termine mit entsprechenden Ortsangaben mit einer entsprechenden Kommunikationsschnittstelle des Kraftfahrzeugs verbunden ist und die anstehenden Termine betreffende Informationen an das Kraftfahrzeug übermittelt. Mithilfe dieser Kalenderdaten kann ebenfalls ein anstehendes Fahrziel des Kraftfahrzeugs identifiziert werden und im Rahmen des Verfahrens beim Bestimmen der Wahrscheinlichkeiten einzelner Zielanordnungen berücksichtigt werden. Durch das Berücksichtigen dieser bereitgestellten Fahrroutenkriterien ist es somit möglich, dass mit besonders hoher Wahrscheinlichkeit die Zielanordnung als wahrscheinlichste Zielanordnung identifiziert wird, die auch der Wunschzielanordnung des Benutzers des Kraftfahrzeugs entspricht.

Zudem kann in der Speichereinheit des Kraftfahrzeugs hinterlegt sein, welche Fahrziele besonders häufig und in bestimmten Zeitfenstern immer wieder angefahren werden. Hierdurch ist es beispielsweise möglich, dass eine Zielanordnung mit einer besonders hohen Wahrscheinlichkeit belegt wird, die bei einem gewünschten automatischen Ausparken an einem Nachmittag eines Werktags in Richtung einer Fahrroute von einer Arbeitsstelle des Benutzers zu dessen Wohnstelle führt. Diese Zielanordnung, die von ihrer Position und Ausrichtung her dem Nachhauseweg des Benutzers entspricht, kann beispielsweise bevorzugt zu typischen Fahrzeiten für diesen Weg, beispielsweise an Werktagen zwischen 16:00 Uhr und 18:00 Uhr, als die Zielanordnung mit der höchsten Wahrscheinlichkeit bewertet werden, da sie basierend auf den in der Speichereinheit hinterlegten Daten zu diesen Zeiten in der Regel der Wunschzielanordnung des Benutzers entspricht.

In einer weiteren vorteilhaften Ausgestaltung der Erfindung ist es vorgesehen, dass die zur Bestimmung der Ausparkroute berücksichtigen vorbestimmten Kriterien zumindest eines der folgenden Kriterien umfassen: Eine minimale Anzahl von Bewegungs- und/oder Lenkschritten zum Erreichen der Zielanordnung, eine minimale zurückgelegte Strecke bis zum Erreichen der Zielanordnung, ein Freilassen eines Mindestfreiraums vor einer Fahrertür des Kraftfahrzeugs. Nachdem die jeweilige Wahrscheinlichkeit der einzelnen Zielanordnungen bestimmt wurde und diese Wahrscheinlichkeitswerte in eine Reihenfolge gebracht wurden, kann prinzipiell für jede der Zielanordnungen eine jeweilige Ausparkroute bestimmt werden. Beim Bestimmen der Ausparkroute werden jedoch weitere Kriterien berücksichtigt. Zum einen soll die Ausparkroute besonders kurz und schnell abzufahren sein. Aus diesem Grund wird die Ausparkroute gewählt, die eine minimale Anzahl von Bewegungs- und/oder Lenkschritten benötigt, um die gewünschte Zielposition zu erreichen. Zudem wird als Kriterium hinterlegt, dass insgesamt eine besonders kurze Strecke zwischen dem Parkplatz und der Zielposition abgefahren werden soll. Hierdurch ergibt sich, dass die ausgewählte Ausparkroute besonders schnell und zudem energieeffizient abgefahren werden kann, da Umwege und aufwendige Lenk- und Bewegungsmanöver vermieden werden. Des Weiteren wird die Ausparkroute derart bestimmt, dass ein Benutzer des Kraftfahrzeugs an der Zielposition genügend Platz hat, um die Fahrertür des Kraftfahrzeugs zu öffnen und in das Kraftfahrzeug einzusteigen. Zusätzlich zu diesem Freilassen eines Mindestfreiraums einer Fahrertür kann auch als Kriterium hinterlegt werden, dass vor anderen Türen des Kraftfahrzeugs, beispielsweise der Beifahrertür, ein Mindestfreiraum freigelassen wird. Der Ausparkvorgang selbst wird somit im Rahmen des Verfahrens besonders vorteilhaft hinsichtlich des Energieverbrauchs des Kraftfahrzeugs, des Verschleißes von Komponenten des Kraftfahrzeugs und des Komforts für den Benutzer beim Einsteigen in das Kraftfahrzeug nach dem Ausparken gestaltet.

In einer weiteren vorteilhaften Ausgestaltung der Erfindung ist es vorgesehen, dass das Bereitstellen der Rangfolge durch eine Anzeige zumindest einer möglichen Zielanordnung an ein Mobilfunkgerät des Benutzers des Kraftfahrzeugs und/oder auf einer Anzeigefläche im Kraftfahrzeuginneren erfolgt. Die mithilfe der Wahrscheinlichkeiten unter Berücksichtigung der bereitgestellten Daten ermittelte Rangfolge der Zielanordnungen wird somit für einen Benutzer des Kraftfahrzeugs sichtbar angezeigt. Diese Anzeige kann auf einem Mobilfunkgerät des Benutzers erfolgen, beispielsweise in einer dafür vorgesehenen Mobilfunktelefon-App. Zusätzlich oder alternativ dazu ist auch eine Anzeige auf einer dafür ausgelegten Anzeigefläche im Inneren des Kraftfahrzeugs möglich. Falls das Kraftfahrzeug vollautonomen angesteuert werden kann, bietet sich die Anzeige auf einem Mobilfunkgerät besonders an, da sich dann der Benutzer des Kraftfahrzeugs außerhalb des Kraftfahrzeugs befinden und von dort aus das Ausparken des Kraftfahrzeugs aktivieren kann. Im Fall eines teilautonomen Ausparkens des Kraftfahrzeugs mittels eines entsprechenden Ausparkhilfeassistenten bietet sich das Anzeigen der Rangfolge der Zielanordnung auf einer entsprechenden Anzeigefläche im Kraftfahrzeuginneren an, da sich der Benutzer des Kraftfahrzeugs in dieser Situation beim Aktivieren des Ausparkens des Kraftfahrzeugs aus dem Parkplatz mithilfe des Verfahrens im Kraftfahrzeuginneren aufhält. Durch die beschriebene Anzeige der Rangfolge wird also ein besonders bedienerfreundliches und dadurch letztendlich auch für einen Nutzer des Kraftfahrzeugs besonders vorteilhaft und komfortabel anwendbares Verfahren zum Ausparken eines Kraftfahrzeugs aus einem Parkplatz bereitgestellt.

In weiterer vorteilhafter Ausgestaltung der Erfindung ist es vorgesehen, dass, falls mehrere Zielanordnungen als mögliche Zielanordnungen ermittelt wurden, die Rangfolge als Liste aller möglichen Zielanordnungen angezeigt wird, wobei die Liste mit der Zielanordnung mit der höchsten Wahrscheinlichkeit und gegebenenfalls einer Zielausrichtung des Kraftfahrzeugs, die der Startausrichtung des Kraftfahrzeugs vor dem Einparken auf dem Parkplatz entspricht, beginnt, und der Benutzer dazu aufgefordert wird, die gewünschte Zielanordnung manuell aus der angezeigten Liste auszuwählen, woraufhin das Kraftfahrzeug von der Steuereinheit angesteuert entlang der zur ausgewählten Zielanordnung führenden und basierend auf der vorbestimmten Ausparkroute ausgeparkt wird.

Falls also mehrere Zielanordnungen als mögliche Zielanordnungen und somit als wahrscheinliche Zielanordnungen unter Berücksichtigung einer Wunschzielanordnung des Benutzers des Kraftfahrzeugs bestimmt wurden, wird also nicht automatisch eine Zielanordnung ausgewählt und ein Ausparken des Kraftfahrzeugs entlang einer zu dieser ausgewählten Zielanordnung führenden Ausparkroute durchgeführt. Die möglichen Zielanordnungen werden stattdessen zunächst dem Benutzer des Kraftfahrzeugs angezeigt, und zwar auf der Anzeige des Mobilfunkgeräts des Benutzers und/oder auf der Anzeigefläche im Kraftfahrzeuginneren. Die Zielanordnungen, die gemäß ihrer Wahrscheinlichkeit in einer Rangfolge eingeordnet und bereitgestellt wurden, werden dem Benutzer hierbei als Liste ausgegeben. Diese Liste beginnt mit der Zielanordnung, die die höchste Wahrscheinlichkeit hat und, falls dies durch die Startanordnung sowie die Verkehrsrichtung auf der an den Parkplatz angrenzenden Straße möglich ist, eine Zielausrichtung des Kraftfahrzeugs aufweist, die der Startausrichtung vor dem Einparken auf dem Parkplatz entspricht. Es wird also bevorzugt die Zielanordnung angezeigt, gemäß der der Benutzer des Kraftfahrzeugs in dieselbe Fahrtrichtung und auf derselben Fahrbahn wie vor dem Einparkvorgang des Kraftfahrzeugs weiterfahren kann. Aus der dem Benutzer des Kraftfahrzeugs angezeigten Liste kann dieser entweder diese als wahrscheinlichste Zielanordnung bestimmte erste Zielanordnung oder eine andere Zielanordnung aus der Liste mit einer niedrigeren Wahrscheinlichkeit manuell auswählen. Daraufhin wird gemäß der entsprechenden Ausparkroute das Kraftfahrzeug zu dieser ausgewählten Zielanordnung gesteuert.

Beim Betrachten der Liste der Zielanordnung sieht der Benutzer des Kraftfahrzeugs zuerst die im Rahmen des Verfahrens als besonders relevant eingestufte erste Zielanordnung. Falls er diese Zielanordnung auch tatsächlich wünscht, kann er dies durch ein manuelles Bestätigen des ersten Elements der Liste auswählen. Diese Auswahl kann beispielsweise durch einen entsprechenden Tastendruck, eine Betätigungshandlung auf einer berührungssensitiven Anzeigefläche oder einen vorbestimmten Sprachbefehl erfolgen. Falls der Benutzer des Kraftfahrzeugs jedoch eine alternative Zielanordnung wünscht, kann er diese Zielanordnung in der Liste suchen und auswählen, da alle ermittelten möglichen Zielanordnungen in der Liste angezeigt werden. Hierdurch wird somit ein besonders leicht zu bedienendes Auswählen der gewünschten Zielanordnungen im Rahmen des Ausparkens des Kraftfahrzeugs aus dem Parkplatz ermöglicht.

In weiterer vorteilhafter Ausgestaltung der Erfindung ist es vorgesehen, dass, falls mehrere Zielanordnungen als mögliche Zielanordnung ermittelt wurden, dem Benutzer nur die Zielanordnung mit der höchsten Wahrscheinlichkeit und gegebenenfalls einer Zielausrichtung des Kraftfahrzeugs, die einer Startausrichtung des Kraftfahrzeugs vor dem Einparken auf dem Parkplatz entspricht, angezeigt wird und der Benutzer dazu aufgefordert wird, die gewünschte Zielanordnung manuell auszuwählen, woraufhin das Kraftfahrzeug von der Steuereinheit angesteuert entlang der zur ausgewählten Zielanordnung führenden und basierend auf den vorbestimmten Kriterien bestimmten Ausparkroute ausgeparkt wird. Bei dieser Anzeigemöglichkeit wird also nur die Zielanordnung angezeigt, die mit der höchsten Wahrscheinlichkeit der Wunschzielanordnung des Benutzers entspricht und die gegebenenfalls die gleiche Zielausrichtung aufweist, die das Kraftfahrzeug bereits vor dem Einparken auf dem Parkplatz aufgewiesen hat. Der Benutzer des Kraftfahrzeugs kann von dieser Zielausrichtung und Zielposition aus weiter in die Fahrrichtung fahren, in die er vor dem Einparken gefahren ist. Diese als besonders wahrscheinliche Zielanordnung ermittelte Zielanordnung wird also als einzige Zielanordnung dem Benutzer des Kraftfahrzeugs auf seiner Anzeige angezeigt.

Kam das Kraftfahrzeug beispielsweise vor dem Einparkvorgang von links auf der Fahrbahnseite auf eine Querparklücke zugefahren, wird dem Fahrer als einzige Zielanordnung ein Ausparken zurück zur Startanordnung vorgeschlagen. Der Fahrer kann daraufhin weiter in der Fahrrichtung fahren, in der er das Kraftfahrzeug vor dem Einparken gesteuert hat. Auch hierdurch wird dem Benutzer des Verfahrens zum Ausparken eines Kraftfahrzeugs aus einem Parkplatz ein besonders schnell zu bedienendes Auswählen einer Zielposition des Kraftfahrzeugs ermöglicht, da die wahrscheinlichste Zielanordnung angezeigt wird.

In weiterer vorteilhafter Ausgestaltung der Erfindung ist es vorgesehen, dass das Anzeigen der weiteren Zielanordnungen mit niedrigeren Wahrscheinlichkeiten manuell durch Auswahl eines entsprechenden Elements auf der Anzeigefläche erfolgt, woraufhin der Benutzer manuell zwischen allen möglichen Szenarien auswählen kann. Nachdem bisher nur die eine Zielanordnung mit der höchsten Wahrscheinlichkeit und gegebenenfalls einer Zielausrichtung des Kraftfahrzeugs, die der Startausrichtung des Kraftfahrzeugs vor dem Einparken auf dem Parkplatz entspricht, angezeigt wird, kann der Benutzer zusätzlich durch Auswahl eines entsprechenden Betätigungselements auf der gewählten Anzeigefläche veranlassen, dass auch die anderen Zielanordnungen, die jedoch mit niedrigeren Wahrscheinlichkeiten der Wunschzielanordnung des Benutzers entsprechen, angezeigt und ausgewählt werden können. Auch bei der Anzeigevariante, bei der nur die relevanteste Zielanordnung dem Benutzer angezeigt wird, kann der Benutzer somit letztendlich zwischen allen ermittelten wahrscheinlichen Zielanordnungen auswählen. Die Auflistung der weiteren möglichen Zielanordnungen erfolgt hierbei bevorzugt in Listenform, erneut geordnet nach ihrer Wahrscheinlichkeit. Der Benutzer kann daher auch bei dieser Anzeigevariante besonders vorteilhaft die von ihm gewünschte Zielanordnung des Kraftfahrzeugs auswählen und bestimmen.

Erfindungsgemäß ist zudem ein Kraftfahrzeug vorgesehen, das eine Steuereinheit umfasst, die dazu ausgelegt ist, das Kraftfahrzeug zumindest teilautonom zu steuern. Das Kraftfahrzeug selbst ist dazu ausgelegt, das oben beschriebene Verfahren zum Ausparken eines Kraftfahrzeugs aus einem Parkplatz durchzuführen. Dieses Kraftfahrzeug kann also im Falle von nur einer möglichen Zielanordnung autonom ausgeparkt und dessen Steuerung an der Zielanordnung wieder dem Benutzer des Kraftfahrzeugs übergeben werden.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung eines Kraftfahrzeugs in einer Querparklücke,
- Fig. 2: eine schematische Darstellung verschiedener möglicher Zielanordnungen eines Kraftfahrzeugs, das aus einer Querparklücke ausparkt,
- Fig. 3: eine schematische Darstellung von Hindernissen in einer Fahrzeugumgebung eines in einer Querparklücke eingeparkten Kraftfahrzeugs,
- Fig. 4: eine schematische Darstellung einer ausgewählten Ein- und Ausparksituation eines Kraftfahrzeugs in eine Querparklücke, die sich an einer einspurigen, mit einem Hindernis begrenzten Straße befindet,
- Fig. 5: eine schematische Darstellung von möglichen Zielanordnungen und Startanordnungen eines Kraftfahrzeugs, das in einer Querparklücke an einer Straße geparkt wurde,
- Fig. 6: eine schematische Darstellung eines in einer Querparklücke geparkten Kraftfahrzeugs, und
- Fig. 7: eine tabellarische Darstellung von möglichen Zielanordnungen bei verschiedenen Umfeldszenarien.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

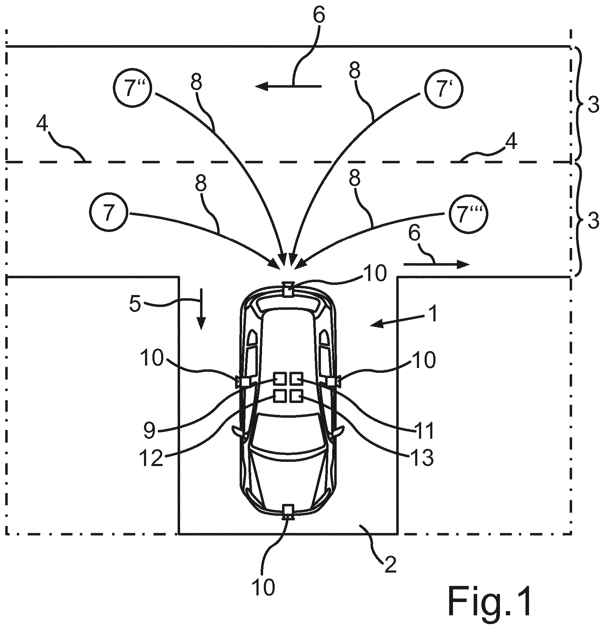

In Fig. 1 ist ein Kraftfahrzeug 1 skizziert, das auf einem Parkplatz 2, bei dem es sich um einen Querparkplatz handelt, abgestellt wurde. Dieser Parkplatz 2 befindet sich am Rand einer Straße mit zwei Fahrbahnen 3, die mithilfe einer Fahrbahnmarkierung 4 voneinander getrennt sind. Das Kraftfahrzeug 1 umfasst eine Steuereinheit 9, eine Auswerteeinheit 11, eine Speichereinheit 12, eine Kommunikationsschnittstelle 13 sowie vier Kameras 10. Die Kameras 10 sind im Front- und Heckbereich sowie an den Seiten des Kraftfahrzeugs 1 angeordnet.

Das Kraftfahrzeug 1 wurde von einer von vier Startanordnungen 7, 7', 7", 7'" aus auf dem Parkplatz 2 eingeparkt. Die entsprechenden Einparkrouten 8 sind mithilfe von Pfeilen skizziert. Die Fahrzeugausrichtung 5 auf dem Parkplatz 2 ist mithilfe eines Pfeils eingezeichnet. Das Kraftfahrzeug 1 wurde hiermit in Vorwärtsrichtung auf dem Parkplatz 2 eingeparkt. Unter der Annahme von Rechtsverkehr, das heißt bei einer eingezeichneten Verkehrsrichtung 6, sind die Startanordnungen 7 und 7' besonders wahrscheinlich. Im Falle der Startanordnungen 7" und 7'" ist davon auszugehen, dass es sich bei der zweispurigen Straße um eine Einbahnstraße handelt.

Von welcher Startanordnung 7, 7', 7", 7"' aus das Kraftfahrzeug 1 mit welcher Fahrzeugausrichtung 5 auf dem Parkplatz 2 eingeparkt wurde, wird mithilfe der Kameras 10 erfasst. Alternativ zu Kameras 10 als Sensoreinrichtungen des Kraftfahrzeugs 1 kann die Erfassung von Fahrzeugumgebungsdaten auch mithilfe von Radargeräten und/oder Lidar-Geräten des Kraftfahrzeugs 1 erfolgen. Des Weiteren ist in der Auswerteeinheit 11 hinterlegt, welche Verkehrsrichtung 6 aufgrund der entsprechenden Ländervariante des Kraftfahrzeugs 1 üblich ist. Zur Bestimmung der Verkehrsrichtung 6 kann jedoch alternativ oder zusätzlich auf entsprechende in einem Navigationssystem des Kraftfahrzeugs 1 hinterlegte Daten zugegriffen werden.

Alternativ oder zusätzlich zu den von den Kameras 10 erfassten Daten der Fahrzeugumgebung, die die aktuelle Parksituation des Kraftfahrzeugs 1 betreffen, kann auf in der Speichereinheit 12 hinterlegte Fahrzeugumgebungsdaten zugegriffen werden. Diese abgespeicherten die Parksituation betreffenden Daten können beispielsweise beim Einparkvorgang des Kraftfahrzeugs 1 mit den Kameras 10 des Kraftfahrzeugs 1 aufgenommen worden sein oder gegebenenfalls aus Daten eines Navigationssystems, wie beispielsweise aus entsprechenden GPS-Datensätzen, entnommen werden.

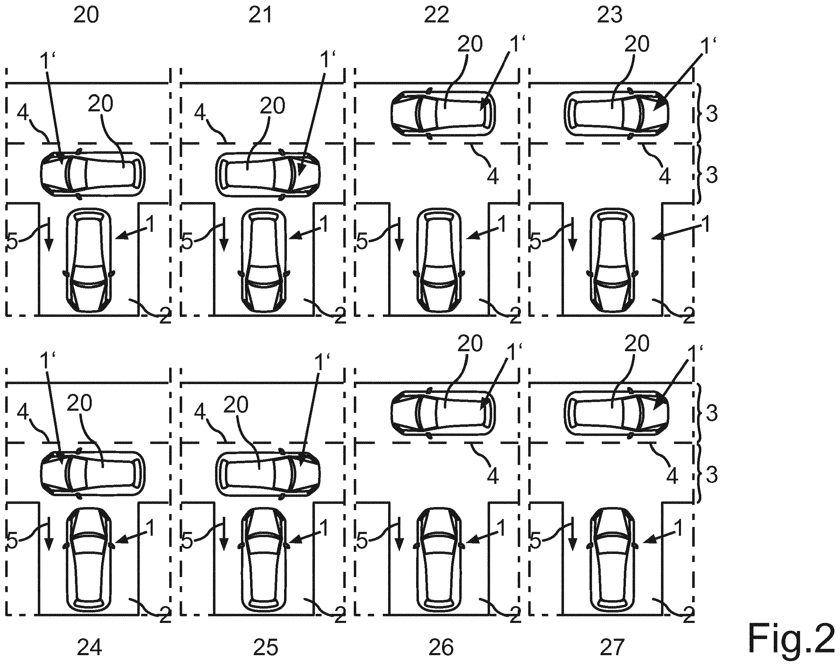

In Fig. 2 sind die verschiedenen Zielanordnungen 20, 21, 22, 23, 24, 25, 26, 27 skizziert, die das Kraftfahrzeug 1 beim Ausparken aus dem Parkplatz 2 annehmen kann. Die Kraftfahrzeuge 1, die die entsprechenden Zielanordnungen 20 bis 27 einnehmen, sind hierbei als Kraftfahrzeuge 1' bezeichnet. Zunächst können hierbei zwei verschiedene Fahrzeugausrichtungen 5 des parkenden Kraftfahrzeugs 1 bezogen auf die Fahrbahn 3 unterschieden werden. Die Zielanordnungen 20 bis 23 beziehen sich jeweils auf ein Kraftfahrzeug 1, das vorwärts in dem Parkplatz 2 eingeparkt wurde, wohingegen sich die Zielanordnungen 24 bis 27 auf ein rückwärts auf dem Parkplatz 2 eingeparktes Kraftfahrzeug 1 beziehen. Sowohl für ein vorwärts als auch für ein rückwärts eingeparktes Kraftfahrzeug 1 ergeben sich jeweils vier verschiedene Zielanordnungen 20 bis 23 beziehungsweise Zielanordnungen 24 bis 27, die sich hinsichtlich der Startanordnung 7, 7', 7", 7'" des Kraftfahrzeugs 1 unterscheiden. Die Startanordnungen 7, 7', 7", 7''' unterscheiden sich hinsichtlich einer Startausrichtung, das heißt dahin gehend, ob das Kraftfahrzeug 1 von links oder rechts bezogen auf den Parkplatz 2 eingeparkt wurde, sowie hinsichtlich einer Startposition, die entweder auf der Fahrbahnseite oder auf der Gegenfahrbahnseite der Straße liegt. Als Fahrbahnseite wird hierbei die an den Parkplatz 2 angrenzende Fahrbahn 3 bezeichnet, wohingegen die Gegenfahrbahnseite die nicht direkt an den Parkplatz 2 angrenzende Fahrbahn 3 bezeichnet.

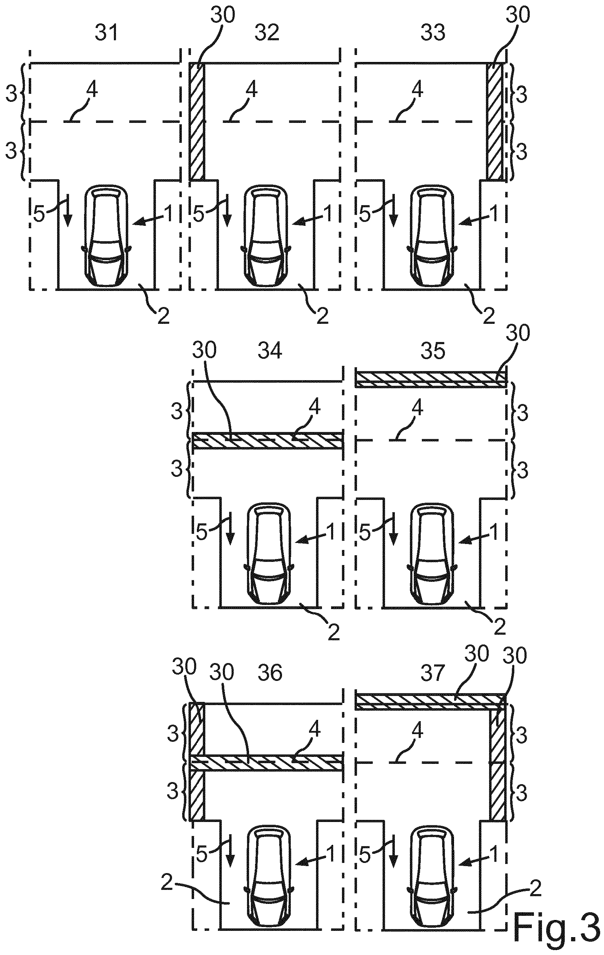

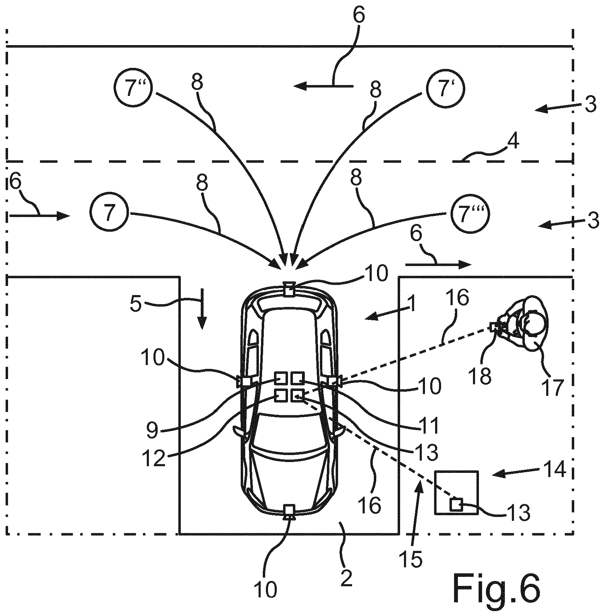

In Fig. 3 ist erneut ein Kraftfahrzeug 1 skizziert, das vorwärts auf einem Parkplatz 2 eingeparkt wurde. Allerdings befinden sich in der Umgebung dieses Parkplatzes 2 und somit in der Umgebung des Kraftfahrzeugs 1 verschieden angeordnete Hindernisse 30. In Fig. 3 sind hierfür sieben verschiedene Umfeldszenarien 31, 32, 33, 34, 35, 36, 37 ohne oder mit unterschiedlich angeordneten Hindernissen 30 skizziert. Die entsprechenden Hindernisse 30 werden ebenfalls mithilfe der Kameras 10 des Kraftfahrzeugs 1 oder anhand entsprechender in der Speichereinheit 12 hinterlegten Daten erkannt und liegen der Auswerteeinheit 11 vor. Die Hindernisse 30 werden daraufhin bei der Ermittlung der möglichen Zielanordnungen 20 bis 27 sowie bei der Ermittlung der Wahrscheinlichkeit berücksichtigt, mit der eine jeweilige Zielanordnung 20 bis 27 unter Berücksichtigung der bereitgestellten Daten betreffend die Fahrzeugausrichtung 5, die Startanordnung 7, 7', 7", 7'" und die Verkehrsrichtung 6 einer Wunschzielanordnung eines Benutzers 17 (siehe Bezugszeichen 17 in Fig. 6) entspricht.

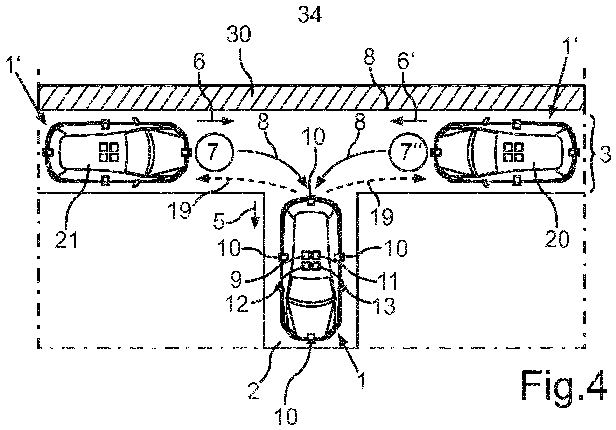

In Fig. 4 ist das Umfeldszenario 34 skizziert, bei dem zwei Zielanordnungen 20 und 21 möglich sind. In Fig. 4 befindet sich der Parkplatz 2 an einer Straße mit einer einzelnen Fahrbahn 3, die von einem parallel zur Fahrbahn 3 verlaufenden Hindernis 30 begrenzt wird. Das Kraftfahrzeug 1 wurde zuvor in Vorwärtsrichtung auf dem Parkplatz 2 eingeparkt. Aufgrund der Begrenzung der Fahrbahn 3 mit dem Hindernis 30 sind hier nur zwei Startanordnungen 7 und 7" möglich. Bei einer Startanordnung 7 ist von einer Verkehrsrichtung 6 auszugehen, wohingegen bei einer Startanordnung 7" von der entgegengesetzten Verkehrsrichtung 6' auszugehen ist. Bei der Fahrbahn 3 handelt es sich somit um eine in nur eine Richtung befahrbare einspurige Straße. Bei der gegebenen Fahrzeugausrichtung 5, der Verkehrsrichtung 6 und der Startanordnung 7 ist somit von einer Zielanordnung 21 des Kraftfahrzeugs 1' auszugehen. Die zu dieser Zielanordnung 21 führende Ausparkroute 19 ist ebenfalls in Fig. 4 in Form eines gestrichelten Pfeils eingezeichnet. Bei der gegebenen Fahrzeugausrichtung 5, der Verkehrsrichtung 6' und der Startanordnung 7" würde hingegen nur die Zielanordnung 20 als sinnvolle Zielanordnung 20 bis 27 ermittelt werden. In diesem Umfeldszenario 34 gibt es somit jeweils nur eine mögliche Zielanordnung 21 beziehungsweise 20 bei bekannter Startanordnung 7 beziehungsweise 7". In diesem Fall wird daher jede der beiden Zielanordnungen 21 und 20 abhängig von der entsprechenden Startanordnung 7 beziehungsweise 7" mit einer Wahrscheinlichkeit von 1, das heißt mit der höchstmöglichen Wahrscheinlichkeit, als die Wunschzielanordnung des Benutzers 17 des Kraftfahrzeugs 1 bewertet. Dies bewirkt, dass ein automatisches Auswählen der entsprechenden Zielanordnung 20 oder 21 erfolgt und das Kraftfahrzeug 1 automatisch oder zumindest teilautomatisch zu der ausgewählten Zielanordnung 20 oder 20' gefahren wird.

Bei der Bestimmung der Ausparkroute 19 selbst werden hierbei zusätzlich vorbestimmte Kriterien berücksichtigt. Bei diesen vorbestimmten Kriterien handelt es sich um zumindest eines der folgenden Kriterien, und zwar eine minimale Anzahl von Bewegungs- und/oder Lenkschritten zum Erreichen der Zielanordnung 20 oder 21, eine minimal zurückgelegte Strecke bis zum Erreichen der Zielanordnung 20 oder 21 sowie ein Freilassen eines Mindestfreiraums vor einer Fahrertür des Kraftfahrzeugs 1'.

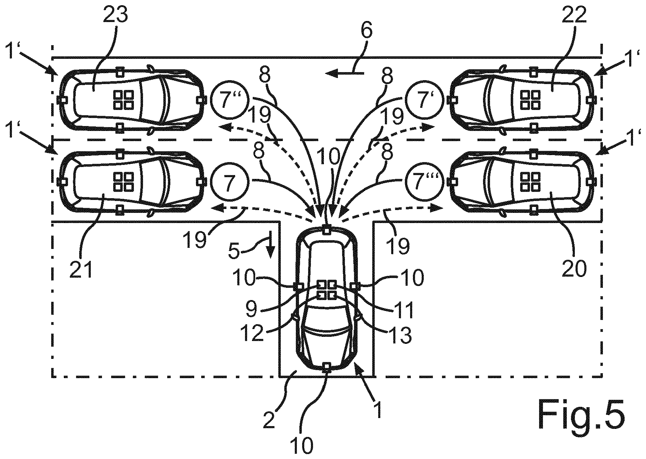

In Fig. 5 ist das Umfeldszenario 31 ohne Hindernis 30 skizziert. In diesem Umfeldszenario 31 sind alle vier Startanordnungen 7, 7', 7", 7'" möglich. Als Verkehrsrichtung 6 wird hierbei von Rechtsverkehr ausgegangen. Die aufgrund der Fahrzeugausrichtung 5 möglichen Zielanordnungen 20 bis 23 sind in Fig. 5 erneut als Kraftfahrzeuge 1' skizziert. Unter Berücksichtigung der Verkehrsrichtung 6 ergeben sich hierdurch die typischen Startanordnungen 7 und 7". Bei der Startanordnung 7 kann das Kraftfahrzeug 1 nach dem Parken auf dem Parkplatz 2 entweder in die gleiche Fahrrichtung wie zuvor weiterfahren oder umkehren und somit in entgegengesetzter Richtung und somit mit zur Startausrichtung entgegengesetzter Zielausrichtung angeordnet sein. Bei der Startanordnung 7 ergeben sich somit die beiden möglichen Zielanordnungen 21 und 22. Bei der Startanordnung 7' ergeben sich analog dazu ebenfalls die Zielanordnungen 22 und 21. Der Benutzer 17 des Kraftfahrzeugs 1 wünscht allerdings typischerweise relativ oft, dass das Kraftfahrzeug 1 nach dem Ausparken wieder in die gleiche Fahrrichtung fährt, in die es bereits vor dem Einparken gefahren ist. Daher wird bei einer Startanordnung 7 die Zielanordnung 21 mit einer höheren Wahrscheinlichkeit von beispielsweise 0,6 belegt als die Zielanordnung 22, die mit einer geringeren Wahrscheinlichkeit von beispielsweise 0,4 belegt wird. Es wird also als weniger wahrscheinlich erachtet, dass der Benutzer 17 des Kraftfahrzeugs 1 wünscht, nach dem Ausparken das Kraftfahrzeug 1 zurück in die Richtung zu fahren, aus der das Kraftfahrzeug 1 zuvor gekommen ist. Analog dazu ergibt sich für die Startanordnung 7' eine höhere Wahrscheinlichkeit für die Zielanordnung 22 als für die Zielanordnung 21. Bei den genannten Startanordnungen 7 und 7' ergibt sich jeweils eine Wahrscheinlichkeit von 0 für die anderen Zielanordnungen 23 und 20, da diese Zielanordnungen 20, 23 gegen die durch die Verkehrsrichtung 6 aufgelegte Straßenordnung angeordnet sind.

Da bei beiden Startanordnungen 7, 7' jeweils zwei Zielanordnungen 21, 22 mit unterschiedlichen Wahrscheinlichkeiten sowie weitere Zielanordnungen 23 und 20 mit jeweils einer Wahrscheinlichkeit von 0 vorliegen, wird nicht automatisch die Zielanordnung mit der höchsten Wahrscheinlichkeit ausgewählt, sondern zunächst eine manuelle Auswahl der Zielanordnungen 20 bis 23 durch den Benutzer 17 des Kraftfahrzeugs 1 angefordert. Hierfür werden die einzelnen Zielanordnungen 20 bis 23 zunächst gemäß ihrer Wahrscheinlichkeit in eine Rangfolge eingeordnet und diese Rangfolge dem Benutzer 17 des Kraftfahrzeugs 1 auf einer entsprechenden Anzeige bereitgestellt. Diese Anzeige kann beispielsweise auf einem Mobilfunkgerät 18 (siehe Bezugszeichen 18 in Fig. 6) oder auf einer entsprechenden Anzeige im Fahrzeuginneren erfolgen.

Die Rangfolge kann hierbei in Form einer Liste angezeigt werden. Bei der Startanordnung 7 würde dies die folgende Liste bewirken: Zielanordnung 21, darauffolgend Zielanordnung 22 und danach die Zielanordnungen 20 und 23. Die Liste beginnt somit mit der Zielanordnung 20 bis 27 mit der höchsten Wahrscheinlichkeit und einer Zielausrichtung des Kraftfahrzeugs 1', die der Startausrichtung des Kraftfahrzeugs 1 vor dem Einparken auf dem Parkplatz 2 entspricht. Der Benutzer 17 kann daraufhin entweder diese erste Zielanordnung 21 aus der Liste manuell durch Betätigen eines entsprechenden Bedienelements auf dem Mobilfunkgerät 18 oder der Anzeigefläche im Kraftfahrzeuginneren auswählen. Falls er diese als besonders wahrscheinlich und der Wunschzielanordnung des Benutzers 17 entsprechend eingeordnete Zielanordnung 21 nicht wünscht, kann der Benutzer 17 eine der anderen Zielanordnungen 22, 20 oder 23 aus der Liste auswählen.

Alternativ zu der Anzeige der Rangfolge als Liste der Zielanordnungen 20 bis 23 kann dem Benutzer 17 des Kraftfahrzeugs 1 auf der entsprechenden Anzeige lediglich die Zielanordnung 21 mit der höchsten ermittelten Wahrscheinlichkeit und die einer Zielausrichtung des Kraftfahrzeugs 1' gemäß der Startausrichtung des Kraftfahrzeugs 1 vor dem Einparken auf dem Parkplatz 2 entspricht angezeigt werden. Erst durch Betätigung eines entsprechenden Elements auf der Anzeigefläche kann sich der Benutzer 17, falls dieser die als am wahrscheinlichsten ermittelte Zielanordnung 21 nicht wünscht, die weiteren Zielanordnungen 22, 20 und 23 anzeigen lassen und eine der alternativen Zielanordnungen 22, 20 oder 23 auswählen.

Bei der Ermittlung der Wahrscheinlichkeit können zudem vorbestimmte bereitgestellte Fahrroutenkriterien berücksichtigt werden. Diese Fahrroutenkriterien enthalten Informationen über ein nächstes mögliches Fahrziel des Kraftfahrzeugs 1 nach dem Ausparken. Diese Fahrroutenkriterien können entweder in einem Navigationssystem des Kraftfahrzeugs 1 hinterlegt sein, beispielsweise da dort bereits eine anstehende nächste Fahrt des Kraftfahrzeugs 1 hinterlegt wurde, oder einem digitalen Kalender des Benutzers 17 des Kraftfahrzeugs 1 entnommen werden. Voraussetzung für Letzteres ist, dass der Benutzer 17 des Kraftfahrzeugs 1 seinen digitalen Kalender in der Auswerteeinheit 11 oder in der Speichereinheit 12 des Kraftfahrzeugs 1 hinterlegt und einen Datenaustausch zwischen seinem digitalen Kalender, der beispielsweise in seinem Mobilfunkgerät 18 hinterlegt ist, und dem Kraftfahrzeug 1 ermöglicht. So kann beispielsweise der Auswerteeinheit 11 bekannt sein, dass der Benutzer 17 an einem bestimmten Tag zu einer bestimmten Uhrzeit an einem bestimmten Ort einen Termin hat. Es ist daher davon auszugehen, dass nach dem Ausparken des Kraftfahrzeugs 1 der Benutzer 17 zu diesem Ort des entsprechenden Termins fahren möchte. Das auf diese Weise im Kraftfahrzeug 1 hinterlegte Fahrziel wird daraufhin bei der Bewertung der jeweiligen Wahrscheinlichkeit der möglichen Zielpositionen 20 bis 27 unter Berücksichtigung der von den Kameras 10 und aus der Speichereinheit 12 entnommenen, die aktuelle Parksituation betreffenden Daten, sowie der Umweltszenarien 31 bis 37 berücksichtigt. Es ist zudem möglich, dass in der Speichereinheit 12 immer wieder zu bestimmten Tageszeiten erfolgende Fahrziele hinterlegt sind und diese Information ebenfalls bei der Bewertung der Wahrscheinlichkeiten der jeweiligen Zielanordnungen 20 bis 27 berücksichtigt wird.

In Fig. 6 ist eine Parksituation des Kraftfahrzeugs 1 auf einem Parkplatz 2 skizziert, der Teil einer Infrastruktureinrichtung ist. Diese Infrastruktureinrichtung, bei der es sich beispielsweise um ein Parkhaus handelt, weist eine Infrastruktursteuereinheit 14 mit einer Infrastrukturkamera 15 und einer Kommunikationsschnittstelle 13 auf. Mithilfe der Infrastrukturkamera 15 werden ebenfalls die die aktuelle Parksituation des Kraftfahrzeugs 1 betreffenden Daten anhand von Fahrzeugumgebungsdaten bereitgestellt, die über eine Kommunikationsverbindung 16 an die Kommunikationsschnittstelle 13 des Kraftfahrzeugs 1 übermittelt werden können. Diese Fahrzeugumgebungsdaten können zusätzlich zu den Sensordaten der Kameras 10 und/oder den in der Speichereinheit 12 hinterlegten Fahrzeugumgebungsdaten bei der Ermittlung möglicher Zielanordnung 20 bis 27 des Kraftfahrzeugs 1 berücksichtigt werden.

In Fig. 6 ist zudem der Benutzer 17 des Kraftfahrzeugs 1 mit dem Mobilfunkgerät 18 skizziert. Mithilfe einer entsprechenden Anwendung, das heißt einer entsprechenden Mobilfunkgerät-App, kann dieser Benutzer 17 auch aus einer relativ großen Entfernung vom Parkplatz 2 die gewünschte Zielanordnung 20 bis 27 des Kraftfahrzeugs 1' unter Berücksichtigung der Startanordnungen 7, 7', 7", 7"', der Fahrzeugausrichtung 5 und der Verkehrsrichtung 6 bestimmen und das Kraftfahrzeug 1 automatisch zu der ausgewählten Zielanordnung 20 bis 27 ausparken lassen.

Die in den Beispielen anhand der Fig. 1 bis 6 beschriebenen Szenarien wurden ausschließlich für ein Kraftfahrzeug, das in Vorwärtsrichtung auf dem Parkplatz 2 eingeparkt wurde, beschrieben. Analog dazu ist auch die umgekehrte Fahrzeugausrichtung 5 im Falle eines rückwärts parkenden Kraftfahrzeugs 1 möglich. Hierbei ergeben sich analog entsprechende Startanordnungen 7, 7', 7", 7''' sowie entsprechende Zielanordnungen 24 bis 27.

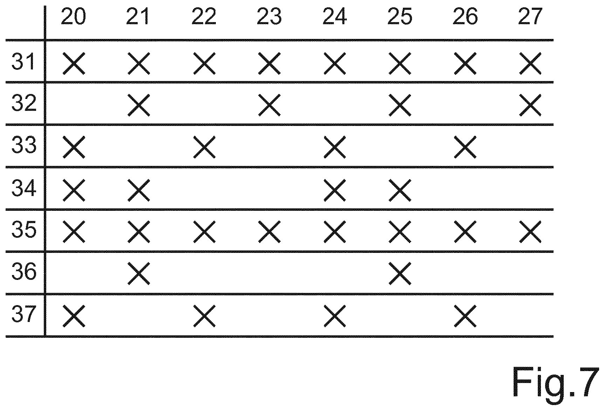

In Fig. 7 ist eine Tabelle dargestellt, in der die möglichen Zielanordnungen 20 bis 27 in Abhängigkeit von den Umfeldszenarien 31 bis 37 angegeben sind. Abhängig vom Umfeldszenario 31 bis 37 sind somit verschiedene und unterschiedlich viele Zielanordnungen 20 bis 27 möglich, wobei sich diese einzelnen Zielanordnungen 20 bis 27 jeweils in ihrer Wahrscheinlichkeit unterscheiden. Diese einzelnen Wahrscheinlichkeiten werden wiederum basierend auf den die aktuelle Parksituation betreffenden Daten und somit anhand von Fahrzeugumgebungsdaten sowie beispielsweise anhand der Informationen über das Fahrziel des Kraftfahrzeugs 1, ermittelt. Die Tabelle stellt somit eine Art Zuordnungsliste bereit, von der aus bei einem bestimmten Umfeldszenario 31 bis 37 auf die möglichen Zielpositionen 20 bis 27 geschlossen werden kann.

Insgesamt zeigen die Beispiele, dass ein Benutzer 17 des Kraftfahrzeugs 1 mit dem beschriebenen Verfahren zum Ausparken des Kraftfahrzeugs 1 aus dem Parkplatz 2 besonders leicht und schnell eine gewünschte Zielanordnung 20 bis 27 auswählen kann. Hierbei werden ihm unter Berücksichtigung von Hindernissen 30, das heißt unter Berücksichtigung der Umweltszenarien 31 bis 37, sowie basierend auf Sensordaten der Kameras 10 und/oder in der Speichereinheit 12 hinterlegten Fahrzeugumgebungsdaten die jeweilige Wahrscheinlichkeit der einzelnen Zielanordnungen 20 bis 27 ermittelt. Basierend auf dieser Wahrscheinlichkeit, mit der eine Zielanordnung 20 bis 27 einer Wunschzielanordnung des Benutzers 17 entspricht, werden dem Benutzer 17 entweder verschiedene abgestufte Zielanordnungen 20 bis 27 zur Auswahl angeboten oder die eine einzig mögliche Zielanordnung 20 bis 27 ermittelt, zu der das Kraftfahrzeug 1 automatisch aus dem Parkplatz 2 ausgeparkt wird.

### Bezugszeichenliste

- 1: Kraftfahrzeug
- 2: Parkplatz
- 3: Fahrbahn
- 4: Fahrbahnmarkierung
- 5: Fahrzeugausrichtung
- 6, 6': Verkehrsrichtung
- 7, 7', 7", 7'": Startanordnung
- 8: Einparkroute
- 9: Steuereinheit
- 10: Kamera
- 11: Auswerteeinheit
- 12: Speichereinheit
- 13: Kommunikationsschnittstelle
- 14: Infrastruktursteuereinheit
- 15: Infrastrukturkamera
- 16: Kommunikationsverbindung
- 17: Benutzer
- 18: Mobilfunkgerät
- 19: Ausparkroute
- 20, 21, 22, 23, 24, 25, 26, 27: Zielanordnung
- 30: Hindernis
- 31, 32, 33 ,34 ,35 ,36 ,37: Umfeldszenario

## Patentansprüche

1. Verfahren zum Ausparken eines Kraftfahrzeugs (1) aus einem Parkplatz (2), wobei das Kraftfahrzeug (1) eine Steuereinheit (12) umfasst, die dazu ausgelegt ist, das Kraftfahrzeug (1) zumindest teilautonom zu steuern, umfassend die folgenden Schritte:
- Bereitstellen von eine aktuelle Parksituation betreffenden Daten,
- Ermitteln möglicher Zielanordnungen (20, 21, 22, 23, 24, 25, 26, 27) des Kraftfahrzeugs (1) basierend auf den bereitgestellten Daten,
- Ermitteln einer Wahrscheinlichkeit, mit der die jeweilige Zielanordnung (20, 21, 22, 23, 24, 25, 26, 27) unter Berücksichtigung der bereitgestellten Daten einer Wunschzielanordnung eines Benutzers (17) des Kraftfahrzeugs (1) entspricht,
- Einordnen der Zielanordnungen (20, 21, 22, 23, 24, 25, 26, 27) gemäß ihrer Wahrscheinlichkeit in eine Rangfolge und Bereitstellen dieser Rangfolge,
- Falls nur eine Zielanordnung (20, 21, 22, 23, 24, 25, 26, 27) als mögliche Zielanordnung (20, 21, 22, 23, 24, 25, 26, 27) ermittelt wurde, erfolgt ein von der Steuereinheit (12) angesteuertes Ausparken des Kraftfahrzeugs (1) entlang einer zu dieser Zielanordnung (20, 21, 22, 23, 24, 25, 26, 27) führenden und basierend auf vorbestimmten Kriterien bestimmten Ausparkroute (19); **dadurch gekennzeichnet, dass** beim Ermitteln der Wahrscheinlichkeit zumindest die folgenden die aktuelle Parksituation betreffenden Daten berücksichtigt werden:
- eine Fahrzeugausrichtung (5) des parkenden Kraftfahrzeugs (1) bezogen auf eine Fahrbahn (3),
- eine Startanordnung (7, 7', 7", 7'"), von der aus das Kraftfahrzeug (1) zuvor auf dem Parkplatz (2) eingeparkt wurde,
- einer Verkehrsrichtung (6, 6') auf der an den Parkplatz (2) angrenzenden Fahrbahn (3).

2. Verfahren nach Anspruch 1,
**dadurch gekennzeichnet, dass**
die die aktuelle Parksituation betreffenden Daten anhand von Fahrzeugumgebungsdaten bereitgestellt werden, die insbesondere von Sensoreinheiten des Kraftfahrzeugs (1) aktuell erfasst werden und/oder in einer Speichereinheit (12) des Kraftfahrzeugs (1) hinterlegt wurden.

3. Verfahren nach einem der vorhergehenden Ansprüche,
**dadurch gekennzeichnet, dass**
beim Ermitteln der Wahrscheinlichkeit als die aktuelle Parksituation betreffende Daten vorbestimmte bereitgestellte Fahrroutenkriterien berücksichtigt werden, die Informationen über ein Fahrziel des Kraftfahrzeugs (1) nach dem Ausparken umfassen und von zumindest einem der folgenden Systeme bereitgestellt werden:
- einem Navigationssystem des Kraftfahrzeugs (1),
- einem digitalen Kalender des Benutzers (17) des Kraftfahrzeugs (1).

4. Verfahren nach einem der vorhergehenden Ansprüche,
**dadurch gekennzeichnet, dass**
die zur Bestimmung der Ausparkroute (19) berücksichtigten vorbestimmten Kriterien zumindest eines der folgenden Kriterien umfassen:
- eine minimale Anzahl von Bewegungs- und/oder Lenkschritten zum Erreichen der Zielanordnung (20, 21, 22, 23, 24, 25, 26, 27),
- eine minimale zurückgelegte Strecke bis zum Erreichen der Zielanordnung (20, 21, 22, 23, 24, 25, 26, 27),
- ein Freilassen eines Mindestfreiraums vor einer Fahrertür des Kraftfahrzeugs (1).

5. Verfahren nach einem der vorhergehenden Ansprüche,
**dadurch gekennzeichnet, dass**
das Bereitstellen der Rangfolge durch eine Anzeige zumindest einer möglichen Zielanordnung (20, 21, 22, 23, 24, 25, 26, 27) auf einem Mobilfunkgerät (18) des Benutzers (17) des Kraftfahrzeugs (1) und/oder auf einer Anzeigefläche im Kraftfahrzeuginneren erfolgt.

6. Verfahren nach Anspruch 5,
**dadurch gekennzeichnet, dass**
falls mehrere Zielanordnungen (20, 21, 22, 23, 24, 25, 26, 27) als mögliche Zielanordnung (20, 21, 22, 23, 24, 25, 26, 27) ermittelt wurden, die Rangfolge als Liste aller möglichen Zielanordnungen (20, 21, 22, 23, 24, 25, 26, 27) angezeigt wird, wobei die Liste mit der Zielanordnung (20, 21, 22, 23, 24, 25, 26, 27) mit der höchsten Wahrscheinlichkeit und gegebenenfalls einer Zielausrichtung des Kraftfahrzeugs (1), die einer Startausrichtung des Kraftfahrzeugs (1) vor dem Einparken auf dem Parkplatz (2) entspricht, beginnt, und der Benutzer (17) dazu aufgefordert wird, die gewünschte Zielanordnung (20, 21, 22, 23, 24, 25, 26, 27) manuell aus der angezeigten Liste auszuwählen, woraufhin das Kraftfahrzeug (1) von der Steuereinheit (12) angesteuert entlang der zur ausgewählten Zielanordnung (20, 21, 22, 23, 24, 25, 26, 27) führenden und basierend auf den vorbestimmten Kriterien bestimmten Ausparkroute (19) ausgeparkt wird.

7. Verfahren nach Anspruch 5,
**dadurch gekennzeichnet, dass**
falls mehrere Zielanordnungen (20, 21, 22, 23, 24, 25, 26, 27) als mögliche Zielanordnung (20, 21, 22, 23, 24, 25, 26, 27) ermittelt wurden, dem Benutzer (17) nur die Zielanordnung (20, 21, 22, 23, 24, 25, 26, 27) mit der höchsten Wahrscheinlichkeit und gegebenenfalls einer Zielausrichtung des Kraftfahrzeugs (1), die einer Startausrichtung des Kraftfahrzeugs (1) vor dem Einparken auf dem Parkplatz (2) entspricht, angezeigt wird und der Benutzer (17) dazu aufgefordert wird, die gewünschte Zielanordnung (20, 21, 22, 23, 24, 25, 26, 27) manuell auszuwählen, woraufhin das Kraftfahrzeug (1) von der Steuereinheit (12) angesteuert entlang der zur ausgewählten Zielanordnung (20, 21, 22, 23, 24, 25, 26, 27) führenden und basierend auf den vorbestimmten Kriterien bestimmten Ausparkroute (19) ausgeparkt wird.

8. Verfahren nach Anspruch 7 und seinen Rückbezügen,
**dadurch gekennzeichnet, dass**
das Anzeigen der weiteren Zielanordnungen (20, 21, 22, 23, 24, 25, 26, 27) mit niedrigeren Wahrscheinlichkeiten manuell durch Auswahl eines entsprechenden Elements auf der Anzeigefläche erfolgt, woraufhin der Benutzer (17) manuell zwischen allen möglichen Zielanordnungen (20, 21, 22, 23, 24, 25, 26, 27) auswählen kann.

9. Kraftfahrzeug (1) umfassend eine Steuereinheit (12), die dazu ausgelegt ist, das Kraftfahrzeug (1) zumindest teilautonom zu steuern, wobei das Kraftfahrzeug (1) dazu ausgelegt ist, ein Verfahren nach einem der vorhergehen Ansprüche durchzuführen.

## Claims

1. Method for unparking a motor vehicle (1) from a parking space (2), wherein the motor vehicle (1) comprises a control unit (12) that is designed to control the motor vehicle (1) at least partly autonomously, comprising the following steps:
- providing data relating to a current parking situation,
- determining possible target positionings (20, 21, 22, 23, 24, 25, 26, 27) of the motor vehicle (1) based on the provided data,
- determining a probability with which the respective target positioning (20, 21, 22, 23, 24, 25, 26, 27) corresponds to a desired target positioning of a user (17) of the motor vehicle (1) while taking into account the provided data,
- ordering the target positionings (20, 21, 22, 23, 24, 25, 26, 27) in a ranking according to the probability thereof and providing said ranking,
- if only one target positioning (20, 21, 22, 23, 24, 25, 26, 27) has been determined as a possible target positioning (20, 21, 22, 23, 24, 25, 26, 27), unparking the motor vehicle (1) controlled by the control unit (12) is carried out along an unparking route (19) leading to said target positioning (20, 21, 22, 23, 24, 25, 26, 27) and defined based on predetermined criteria;
**characterized in that**
when determining the probability at least the following data relating to the current parking situation are taken into account:
- a vehicle orientation (5) of the parked motor vehicle (1) in relation to a lane (3),
- a starting positioning (7, 7', 7", 7''') from which the motor vehicle (1) was previously parked on the parking space (2),
- a traffic direction (6, 6') on the lane (3) adjacent to the parking space (2).

2. Method according to Claim 1,
**characterized in that**
the data relating to the current parking situation are provided using vehicle surroundings data, which in particular are currently sensed by sensor units of the motor vehicle (1) and/or have been stored in a memory unit (12) of the motor vehicle (1).

3. Method according to either of the preceding claims, **characterized in that**
when determining the probability, provided predetermined driving route criteria are taken into account as data relating to the current parking situation, which criteria contain information about a destination of the motor vehicle (1) after unparking and are provided by at least one of the following systems:
- a navigation system of the motor vehicle (1),
- a digital calendar of the user (17) of the motor vehicle (1).

4. Method according to any one of the preceding claims, **characterized in that**
the predetermined criteria that are taken into account for determining the unparking route (19) include at least one of the following criteria:
- a minimum number of movement and/or steering steps to reach the target positioning (20, 21, 22, 23, 24, 25, 26, 27),
- a minimum distance covered until reaching the target positioning (20, 21, 22, 23, 24, 25, 26, 27),
- leaving a minimum amount of free space in front of a driver's door of the motor vehicle (1).

5. Method according to any one of the preceding claims, **characterized in that**
providing the ranking is carried out by displaying at least one possible target positioning (20, 21, 22, 23, 24, 25, 26, 27) on a mobile telephone (18) of the user (17) of the motor vehicle (1) and/or on a display surface in the interior of the motor vehicle.

6. Method according to Claim 5,
**characterized in that**
if a plurality of target positionings (20, 21, 22, 23, 24, 25, 26, 27) have been determined as possible target positioning (20, 21, 22, 23, 24, 25, 26, 27), the ranking is displayed as a list of all possible target positionings (20, 21, 22, 23, 24, 25, 26, 27), wherein the list starts with the target positioning (20, 21, 22, 23, 24, 25, 26, 27) with the highest probability and possibly a target orientation of the motor vehicle (1) corresponding to a starting orientation of the motor vehicle (1) before parking on the parking space (2), and the user (17) is requested to manually select the desired target positioning (20, 21, 22, 23, 24, 25, 26, 27) from the displayed list, whereupon the motor vehicle (1) while controlled by the control unit (12) is unparked along the unparking route (19) leading to the selected target positioning (20, 21, 22, 23, 24, 25, 26, 27) and defined based on the predetermined criteria.

7. Method according to Claim 5,
**characterized in that**
if a plurality of target positionings (20, 21, 22, 23, 24, 25, 26, 27) have been determined as possible target positioning (20, 21, 22, 23, 24, 25, 26, 27), only the target positioning (20, 21, 22, 23, 24, 25, 26, 27) with the highest probability and possibly a target orientation of the motor vehicle (1) corresponding to a starting orientation of the motor vehicle (1) before parking on the parking space (2) is displayed to the user (17) and the user (17) is requested to manually select the desired target positioning (20, 21, 22, 23, 24, 25, 26, 27), whereupon the motor vehicle (1) while controlled by the control unit (12) is unparked along the unparking route (19) leading to the selected target positioning (20, 21, 22, 23, 24, 25, 26, 27) and defined based on the predetermined criteria.

8. Method according to Claim 7 and the back references thereof,
**characterized in that**
displaying the further target positionings (20, 21, 22, 23, 24, 25, 26, 27) with lower probabilities is carried out manually by selecting a corresponding element on the display surface, whereupon the user (17) can manually choose between all possible target positionings (20, 21, 22, 23, 24, 25, 26, 27).

9. Motor vehicle (1) comprising a control unit (12) that is designed to control the motor vehicle (1) at least partly autonomously, wherein the motor vehicle (1) is designed to carry out a method according to any one of the preceding claims.

## Revendications

1. Procédé de sortie d'un véhicule automobile (1) d'un espace de stationnement (2), dans lequel le véhicule automobile (1) comprend une unité de commande (12) qui est conçue pour commander le véhicule automobile (1) au moins partiellement de manière autonome, comprenant les étapes consistant à :
- fournir des données relatives à une situation de stationnement actuelle,
- déterminer des dispositions cibles (20, 21, 22, 23, 24, 25, 26, 27) possibles du véhicule automobile (1) sur la base des données fournies,
- déterminer une probabilité avec laquelle la disposition cible (20, 21, 22, 23, 24, 25, 26, 27) respective correspond à une disposition cible souhaitée d'un utilisateur (17) du véhicule automobile (1), en tenant compte des données fournies,
- classer les dispositions cibles (20, 21, 22, 23, 24, 25, 26, 27) sous forme d'une classification en fonction de leur probabilité et fournir ladite classification,
- dans le cas où une seule disposition cible (20, 21, 22, 23, 24, 25, 26, 27) a été déterminée comme étant une disposition cible (20, 21, 22, 23, 24, 25, 26, 27) possible, une sortie de stationnement du véhicule automobile (1), commandée par l'unité de commande (12), est effectuée le long d'un itinéraire de sortie de stationnement (19) qui mène à ladite disposition (20, 21, 22, 23, 24, 25, 26, 27) cible et qui est déterminé sur la base de critères prédéterminés ;
**caractérisé en ce que**,
lors de la détermination de ladite probabilité, au moins les données suivantes concernant la situation de stationnement actuelle sont prises en compte :
- une orientation (5) du véhicule automobile en cours de stationnement (1) par rapport à une chaussée (3),
- une disposition initiale (7, 7', 7", 7"') à partir de laquelle le véhicule automobile (1) a été précédemment amené à stationner dans l'espace de stationnement (2),
- un sens de circulation (6, 6') sur la chaussée (3) adjacente à l'espace de stationnement (2).

2. Procédé selon la revendication 1, **caractérisé en ce que**
les données relatives à la situation de stationnement actuelle sont fournies sur la base de données d'environnement du véhicule qui sont actuellement détectées en particulier par des unités à capteurs du véhicule automobile (1) et/ou qui ont été stockées dans une unité à mémoire (12) du véhicule automobile (1).

3. Procédé selon l'une des revendications précédentes, **caractérisé en ce que**,
lors de la détermination de ladite probabilité, en tant que données relatives à la situation de stationnement actuelle, des critères d'itinéraire de conduite prédéterminés fournis sont pris en compte, lesquels comprennent des informations sur une destination de conduite du véhicule automobile (1) après la sortie du stationnement et sont fournis par au moins l'un des systèmes suivants :
- un système de navigation du véhicule automobile (1),
- un calendrier numérique de l'utilisateur (17) du véhicule automobile (1).

4. Procédé selon l'une des revendications précédentes, **caractérisé en ce que**
les critères prédéterminés pris en compte pour déterminer l'itinéraire de sortie de stationnement (19) comprennent au moins l'un des critères suivants :
- un nombre minimum d'étapes de déplacement et/ou de braquage pour atteindre la disposition cible (20, 21, 22, 23, 24, 25, 26, 27),
- une distance minimale parcourue jusqu'à ce que la disposition cible soit atteinte (20, 21, 22, 23, 24, 25, 26, 27)
- la libération d'un espace libre minimum devant la porte du conducteur du véhicule automobile (1).

5. Procédé selon l'une des revendications précédentes, **caractérisé en ce que**
la fourniture de la classification est effectuée par un affichage d'au moins une disposition cible (20, 21, 22, 23, 24, 25, 26, 27) possible sur un appareil radio mobile (18) de l'utilisateur (17) du véhicule automobile (1) et/ou sur une surface d'affichage à l'intérieur du véhicule automobile.

6. Procédé selon la revendication 5, **caractérisé en ce que**
dans le cas où plusieurs dispositions cibles (20, 21, 22, 23, 24, 25, 26, 27) ont été déterminées comme étant des dispositions cibles (20, 21, 22, 23, 24, 25, 26, 27) possibles, la classification est affichée sous la forme d'une liste de toutes les dispositions cibles (20, 21, 22, 23, 24, 25, 26, 27) possibles, dans lequel la liste commence par la disposition cible (20, 21, 22, 23, 24, 25, 26, 27) ayant la probabilité la plus élevée et, le cas échéant, une orientation cible du véhicule automobile (1) correspondant à une orientation initiale du véhicule automobile (1) avant le stationnement dans l'espace de stationnement (2), et l'utilisateur (17) est invité à sélectionner manuellement la disposition cible (20, 21, 22, 23, 24, 25, 26, 27) souhaitée dans la liste affichée, le véhicule automobile (1) étant alors ensuite amené à sortir de son stationnement, de manière commandée par l'unité de commande (12), le long de l'itinéraire de sortie de stationnement (19) qui mène à la disposition cible (20, 21, 22, 23, 24, 25, 26, 27) sélectionnée et qui est déterminé sur la base des critères prédéterminés.

7. la méthode selon la revendication 5, **caractérisée en ce que**
dans le cas où plusieurs dispositions de cible (20, 21, 22, 23, 24, 25, 26, 27) ont été déterminées comme étant des dispositions cibles (20, 21, 22, 23, 24, 25, 26, 27) possibles, seule la disposition cible (20, 21, 22, 23, 24, 25, 26, 27) ayant la plus grande probabilité et, le cas échéant, une orientation cible du véhicule automobile (1) correspondant à une orientation initiale du véhicule automobile (1) avant son stationnement dans l'espace de stationnement (2), est présentée à l'utilisateur (17) et l'utilisateur (17) est invité à sélectionner manuellement la disposition cible (20, 21, 22, 23, 24, 25, 26, 27) souhaitée, le véhicule automobile (1) étant alors ensuite amené à sortir de son stationnement, de manière commandée par l'unité de commande (12), le long de l'itinéraire de sortie de stationnement (19) qui mène à la disposition cible (20, 21, 22, 23, 24, 25, 26, 27) sélectionnée et qui est déterminé sur la base des critères prédéterminés.

8. Procédé selon la revendication 7 et les références qui y sont associées, **caractérisé en ce que** l'affichage des autres dispositions cibles (20, 21, 22, 23, 24, 25, 26, 27) ayant des probabilités plus faibles est effectué manuellement par sélection d'un élément correspondant sur la surface d'affichage, l'utilisateur (17) pouvant alors ensuite sélectionner manuellement toutes les dispositions cibles (20, 21, 22, 23, 24, 25, 26, 27) possibles.

9. Véhicule automobile (1) comprenant une unité de commande (12) conçue pour commander le véhicule automobile (1) de manière au moins partiellement autonome, dans lequel le véhicule automobile (1) est conçu pour mettre en œuvre un procédé selon l'une des revendications précédentes.
